# EUROPÄISCHE PATENTANMELDUNG

(11) **EP 3 153 316 A1**
(43) Veröffentlichungstag der Anmeldung: **12.04.2017**
(21) Anmeldenummer: 15189025.8
(22) Anmeldetag: 08.10.2015
(51) Int. Cl.: B32B 27/08, B32B 27/16, B32B 27/26, B32B 27/30, B32B 27/32, E04D 5/00

(54) **UV-VERNETZUNG VON POLYOLEFIN-ABDICHTUNGSFOLIEN**

(71) Anmelder: Sika Technology AG, 6340 Baar (CH)
(72) Erfinder: Gössi, Matthias, 8610 Uster (CH); Keiser, Stefan, 6103 Schwarzenberg (CH); Quinzler, Dorothee, 6055 Alpnach Dorf (CH)
(74) Vertreter: Sika Patent Attorneys

(57) **Zusammenfassung**

Die vorliegende Erfindung betrifft eine Abdichtungsmembran umfassend eine Kunststofffolie, die mindestens ein UV-vernetztes Ethylen-Copolymer umfasst, wobei das Ethylen-Copolymer ein thermoplastisches Elastomer ist. Die Erfindung betrifft auch ein Verfahren zur Herstellung einer Abdichtungsmembran, umfassend a) Schmelzen von Ethylen-Copolymer, wobei zum Ethylen-Copolymer oder dessen Schmelze mindestens ein Photoinitiator zugegeben wird, b) Formen der Schmelze zu einem flächenförmigen Material und c) Bestrahlen des flächenförmigen Materials mit UV-Strahlung.

Die Erfindung ermöglicht die Bereitstellung von hochflexiblen und gleichzeitig temperaturbeständigen Abdichtungsmembranen. Eine Aufbringung von schweißbaren Deckschichten auf die erstellte Abdichtungsfolie ist ohne Probleme möglich.

## Beschreibung

### Technisches Gebiet

Die Erfindung betrifft Abdichtungsmembranen, die zur Bauwerksabdichtung geeignet sind, insbesondere zur Abdichtung von Böden oder Dächern.

### Stand der Technik

Substrate, welche gegen Wasser abgedichtet werden müssen, insbesondere Betonstrukturen, finden sich viele im Hoch- und Tiefbau. Derartige Substrate und Untergründe werden typischerweise durch Bitumenbahnen oder Kunststoffmembranen abgedichtet. Wichtige Anwendungsgebiete für Abdichtungsmembranen sind Boden- und Dachabdichtungen. Neben der thermischen und mechanischen Stabilität werden auch gutes elastisches Verhalten bzw. eine gute Flexibilität gefordert.

Für Dachbahnen werden heute ausschließlich thermoplastische Polymere mit hohem Schmelzpunkt von über 130°C verwendet. Homo- und Copolymere, die Ethylenbasierte Kristalle ausbilden, sind somit bereits ungeeignet. Es werden deshalb PPbasierte Copolymere z.B. mit einer Schmelztemperatur von 140°C, oder auch PVC mit einer Schmelztemperatur im Bereich von 130-190°C eingesetzt. Alternativ werden chemisch vernetzte Kautschuke verwendet, vor allem EPDM, z.B. Firestone Rubberguard^{®} von Firestone, und PIB, z.B. Rhepanol^{®} von FDT.

Abdichtungsmembranen auf Basis von vernetzten Kautschuken sind sehr flexibel bzw. weisen einen sehr tiefen E-Modul auf. Die Verarbeitung von Kautschuken erfordert aber relativ aufwendige Produktionsanlagen, was die Kosten erhöht. Zudem können chemisch vernetzte Kautschuke nicht verschweißt werden. Das Auftragen einer schweißbaren, d.h. thermoplastischen Schweißschicht auf solche Kautschuke ist aus Verträglichkeitsgründen sehr schwierig.

Der Nachteil von Abdichtungsmembranen auf Basis von thermoplastischen Polymeren nach dem Stand der Technik ist ihre relativ geringe Flexibilität bzw. ein relativ hoher E-Modul.

Thermoplastische Polyolefine sind teilkristalline Polymere. Sie vernetzen physikalisch über die Kristallite. Genau diese kristallinen Lamellen beeinflussen maßgebend die Zugfestigkeit und den E-Modul. Die heute kommerziell erhältlichen Polyolefine mit tiefem Modul werden als thermoplastische Elastomere bezeichnet und sind alle Copolymere. Das Comonomer hat den vorrangigen Zweck, die Kristallisation zu stören, und somit den Modul tief zu halten. Leider reduziert das Comonomer aber auch den Schmelzpunkt. Polyolefin-Elastomere mit sehr tiefem E-Modul haben deshalb auch einen tiefen Schmelzpunkt von z.B. etwa 30-40°C.

Um hochflexible, auf Polyolefin basierte Abdichtungsmembranen zu fertigen, würden sich diese Copolymere wegen des tiefen Moduls zwar anbieten, aber es fehlt eine ausreichende Wärmestabilität. Daher sind solche Copolymere für Abdichtungsmembranen in dieser Form nicht geeignet.

### Darstellung der Erfindung

Die Aufgabe der vorliegenden Erfindung bestand daher in der Bereitstellung einer Abdichtungsmembran, welche die vorstehend diskutierten Nachteile des Standes der Technik nicht aufweist. Insbesondere sollte die Abdichtungsmembran eine hohe Flexibilität bzw. ein niedriges E-Modul besitzen und gleichzeitig eine gute Wärmefestigkeit aufweisen.

Desweiteren sollte es möglich sein, eine schweißbare Abdichtungsmembran bereitzustellen bzw. schweißbare Schichten ohne Probleme auf die Folien aufzubringen zu können. Zudem soll die Abdichtungsmembran auf einfache Weise herstellbar sein. Die Herstellung sollte möglichst auf üblichen Produktionsanlagen ohne größere Änderungen erfolgen können.

Es hat sich überraschenderweise gezeigt, dass dieses Problem durch chemisches Vernetzen von Polyolefin-Polymeren unter Verwendung von UV-Strahlung gelöst werden kann.

Dementsprechend betrifft die Erfindung eine Abdichtungsmembran umfassend eine Kunststofffolie, die mindestens ein UV-vernetztes Ethylen-Copolymer umfasst, wobei das Ethylen-Copolymer ein thermoplastisches Elastomer ist.

Die Erfindung betrifft ferner ein Verfahren zur Herstellung einer solchen Abdichtungsmembran, umfassend a) Schmelzen von Ethylen-Copolymer, wobei dem Ethylen-Copolymer oder dessen Schmelze ein Photoinitiator zugegeben wird, b) Formen der Schmelze zu einem flächenförmigen Material und c) Bestrahlen des flächenförmigen Materials mit UV-Strahlung.

Durch das chemische Vernetzen des thermoplastischen Elastomers kann dessen Wärmefestigkeit verbessert werden, da die kovalenten Bindungen der Vernetzung auch bei erhöhten Temperaturen Bestand haben und somit das ursprünglich rein physikalisch vernetzte thermoplastische Polymer auch über dessen Schmelzpunkt zusammenhalten.

Durch das UV-Vernetzen von thermoplastischen Elastomeren kann z.B. auf üblichen Extrusionsanlagen eine Folie gefertigt werden, die sowohl einen tiefen Modul als auch eine gute thermische Beständigkeit aufweist. Zudem kann aus demselben Material, bzw. einem Copolymeren mit weniger Comonomer und somit höherem Schmelzpunkt eine schweißbare Deck- und Rückschicht aufgetragen werden.

Die Erfindung ermöglicht somit das Herstellen von hochflexiblen und gleichzeitig temperaturbeständigen Abdichtungsmembranen, insbesondere für die Boden- oder Dachabdichtung, die auf Polyolefinen (TPO) basieren. Die Herstellung kann auf Produktionsanlagen, die für Abdichtungsmembranen üblich sind, wie z.B. Extrusionsanlagen, erfolgen, wobei lediglich eine zusätzliche Vorrichtung für die UV-Bestrahlung benötigt wird. Eine Aufbringung von schweißbaren Deckschichten auf die erstellte Abdichtungsfolie ist ohne Probleme möglich.

Ein weiterer Aspekt der Erfindung betrifft die Verwendung der Abdichtungsmembran zum Abdichten von Substraten von Bauwerken. Besonders bevorzugte Ausführungsformen der Erfindung sind Gegenstand der abhängigen Ansprüche.

### Wege zur Ausführung der Erfindung

Die erfindungsgemäße Abdichtungsmembran umfasst eine Kunststofffolie, die mindestens ein UV-vernetztes Ethylen-Copolymer umfasst, wobei das Ethylen-Copolymer ein thermoplastisches Elastomer ist.

Die Abdichtungsmembran kann die Kunststofffolie umfassen oder aus der Kunststofffolie bestehen. Die Abdichtungsmembran kann neben der Kunststofffolie eine oder mehrere weitere Schichten und/oder Verstärkungselemente umfassen. Bei der Kunststofffolie handelt es sich vorzugsweise um eine flexible Folie.

Die Kunststofffolie umfasst mindestens ein UV-vernetztes Ethylen-Copolymer, wobei das Ethylen-Copolymer ein thermoplastisches Elastomer ist. Thermoplastische Elastomere sind Kunststoffe, die sowohl elastomere als auch thermoplastische Eigenschaften aufweisen. Angaben zu den Begriffen und zur Nomenklatur finden sich z.B. in der DIN EN ISO 18064. Der E-Modul eines geeigneten thermoplastischen Elastomers ist z.B. kleiner als 100 MPa, bevorzugt kleiner als 50 MPa. Der E-Modul kann bestimmt werden gemäss ISO 527-2:2012.

Bei den Ethylen-Copolymeren handelt es sich um Copolymere von Ethylen und einem oder mehreren, vorzugsweise einem, Comonomeren. In der Regel handelt es sich bevorzugt um Blockcopolymere. Bei dem Comonomer kann es sich z.B. um α-Olefin, wie But-1-en, Pent-1-en, Hex-1-en oder Oct-1-en, Propylen oder Vinylacetat handeln. Ein α-Olefin ist ein Alk-1-en mit mindestestens 4 Kohlenstoffatomen. Bevorzugt sind α-Olefine mit 4 bis 10 Kohlenstoffatomen, insbesondere mit 4 bis 8 Kohlenstoffatomen.

Konkrete Beispiele sind Ethylen-But-1-en-Copolymer, Ethylen-Hex-1-en-Copolymer, Ethylen-Oct-1-en-Copolymer, Ethylen-Vinylacetat-Copolymer oder Ethylen-Propylen-Copolymer, wobei Ethylen-Oct-1-en-Copolymer und Ethylen-Vinylacetat-Copolymer bevorzugt sind. Copolymere aus einem Ethylen und einem α-Olefin lassen sich z.B. über Metallocen-Katalyse herstellen.

Der Ethylenanteil im Ethylen-Copolymer kann je nach eingesetzten Comonomeren stark variieren. Der Ethylenanteil im Ethylen-Copolymer kann z.B. im Bereich von 5 bis 95 Gew.-%, bevorzugt 10 bis 85 Gew.%, liegen.

Der Ethylenanteil in Ethylen-Copolymeren mit Vinylacetat oder α-Olefinen kann z.B. im Bereich von 40 bis 95 Gew.-%, bevorzugt im Bereich von 45 bis 85 Gew.-%, liegen. Der Ethylenanteil in Ethylen-Copolymeren mit Propylen kann z.B. im Bereich von 5 bis 30 Gew.-%, bevorzugt im Bereich von 10 bis 20 Gew.-%, liegen.

Solche Ethylen-Copolymere, die thermoplastische Elastomere darstellen, sind im Handel erhältlich, z.B. unter der Handelsbezeichnungen Evatane^{®} von Arkema, Queo von Borealis, Levamelt^{®} von Lanxess , Engage^{®} von Dow oder Vistamaxx^{®} von ExxonMobile. Konkrete Beispiele sind

| | | | |
|---|---|---|---|
| Evatane^{®}2803 | Arkema | Ethylen-Vinylacetat | VA-Gehalt: 28 Gew.-% |
| Evatane^{®}4055 | Arkema | Ethylen-Vinylacetat | VA-Gehalt: 40 Gew.-% |
| Levamelt^{®}500 | Lanxess | Ethylen-Vinylacetat | VA-Gehalt: 50 Gew.-% |
| Engage^{®}8450 | Dow | Ethylen-1-Octen | Octen-Gehalt: 23 Gew.-% |
| Engage^{®}8200 | Dow | Ethylen-1-Octen | Octen-Gehalt: 39 Gew.-% |
| Engage^{®}8842 | Dow | Ethylen-1-Octen | Octen-Gehalt: 47 Gew.-% |
| Vistamaxx^{®}6102 | Exxon | Ethylen-Propylen | PP-Gehalt: 84 Gew.-% |
| Vistamaxx^{®}3020 | Exxon | Ethylen-Propylen | PP-Gehalt: 89 Gew.-% |

Das Ethylen-Copolymer liegt in der Kunststofffolie in UV-vernetzter Form vor, d.h. die Copolymerketten sind durch UV-Bestrahlung chemisch vernetzt. Die Vernetzung erfolgt also über kovalente Bindungen. Die UV-Vernetzung von Polyolefinen ist bekannt. Geeignete Verfahren zur UV-Vernetzung werden weiter unten im Einzelnen erläutert.

Die Kunststofffolie kann gegebenenfalls eine Mischung von zwei oder mehr Typen von vorgängig erwähnten Ethylen-Copolymeren, die thermoplastische Elastomere darstellen, umfassen, wobei die Typen z.B. einen unterschiedlichen Schmelzflussindex (MFI) aufweisen.

Dem Fachmann ist klar, dass die Kunststofffolie auch ein oder mehrere Additive enthalten kann, wie z.B. Füllstoffe, Hitzestabilisatoren, Weichmacher, Gleitmittel, Biozide, Flammschutzmittel, Antioxidantien, Pigmente und Farbstoffe.

Die Kunststofffolie kann gegebenenfalls eine Trägerstruktur aufweisen. Die Trägerstruktur trägt zur Formstabilität der Kunststofffolie bei. Sie kann an der Kunststofffolie angebunden oder in sie eingebettet sein. Die Trägerstruktur kann aus Fasern gebildet oder ein Gitter sein, bevorzugt sind Trägerstrukturen aus Fasern. Es können organische, anorganische oder synthetische Fasern sein. Beispiele für organische Fasern sind Zellulose-, Baumwoll- und Proteinfasern. Beispiele für anorganische Fasern sind Glasfasern. Beispiele für synthetische Fasern sind Fasern aus Polyester oder aus einem Homo- oder Copolymeren von Ethylen und/oder Propylen und aus Viskose.

Die Trägerstruktur aus Fasern ist z.B. ein Gewebe, Gelege oder Gewirke, wobei die Trägerstruktur bevorzugt ein Filz oder Vlies ist. Vorzugsweise ist die Trägerstruktur in die Kunststofffolie eingebettet. Die Trägerstruktur weist vorteilhaft Zwischenräume auf, welche zumindest teilweise vom Material der Kunststofffolie durchsetzt sind.

In der Kunststofffolie sind z.B. 25 bis 100 Gew.-%, bevorzugt 40 bis 90 Gew.-%, UV-vernetztes Ethylen-Copolymer, bezogen auf den Kunststoffgehalt der Kunststofffolie, enthalten. Der Kunststoffgehalt einer gegebenenfalls vorhandenen Trägerstruktur wird dabei nicht berücksichtigt.

In der Kunststofffolie sind z.B. mindestens 5 Gew.-%, bevorzugt mindestens 15 Gew.-%, UV-vernetztes Ethylen-Copolymer, bezogen auf das Gesamtgewicht der Kunststofffolie, enthalten. Die Kunststofffolie kann z.B. bis zu 95 Gew.-%, bevorzugt bis 85 Gew.-%, UV-vernetztes Ethylen-Copolymer, bezogen auf das Gesamtgewicht der Kunststofffolie, enthalten. In der Kunststofffolie sind z.B. 5 bis 95 Gew.-%, bevorzugt 15 bis 85 Gew.-%, UV-vernetztes Ethylen-Copolymer, bezogen auf das Gesamtgewicht der Kunststofffolie, enthalten. Bei diesen Mengenangaben wird der Kunststoffgehalt einer gegebenenfalls vorhandenen Trägerstruktur nicht berücksichtigt.

Die Kunststofffolie weist z.B. eine Dicke von 0,1 bis 5 mm, bevorzugt von 0,5 bis 4 mm und besonders bevorzugt von 1 bis 3 mm auf.

Die Abdichtungsmembran kann neben der Kunststofffolie eine oder mehrere weitere Schichten umfassen. Es kann z.B. auf einer Seite oder auf beiden Seiten der Kunststofffolie eine Deckschicht angeordnet werden. Wenn auf beiden Seiten der Kunststofffolie eine Deckschicht angeordnet ist, können die Deckschichten gleich oder verschieden sein. Die Deckschicht ist bevorzugt eine Kunststoffschicht. Sie kann z.B. ein oder mehrere thermoplastische Polymere umfassen.

In einer bevorzugten Ausführungsform enthält die Deckschicht ein Ethylen-Copolymer und/oder ein Ethylen-Homopolymer bzw. Polyethylen. Beispiele für die Ethylen-Copolymere sind die gleichen, die bereits für die Kunststofffolie aufgeführt wurden, wobei der Ethylen-Gehalt wie oben beschrieben oder davon verschieden sein kann. In einer besonders bevorzugten Ausführungsform enthält die Deckschicht ein Ethylen-Copolymer, das dem Ethylen-Copolymer in der Kunststofffolie entspricht, wobei der Ethylengehalt des Ethylen-Copolymers in der Deckschicht gleich oder größer ist als der Ethylengehalt des Ethylen-Copolymers in der Kunststofffolie.

Der Ethylenanteil im Ethylen-Copolymer der Deckschicht kann z.B. im Bereich von 1 bis 99 Gew.-%, bevorzugt im Bereich von 10 bis 90 Gew.-%, liegen.

Die Schichtdicke der Deckschicht kann z.B. im Bereich von 0,05 bis 0,4 mm und bevorzugt im Bereich von 0,1 bis 0,3 mm liegen.

Gegebenenfalls kann die Abdichtungsmembran eine oder mehrere weitere Schichten umfassen.

Die Abdichtungsmembran wird z.B. als vorgefertigte Bahn verwendet, insbesondere in Form einer Rolle. Weiter kann die Abdichtungsmembran auch in Form von flächigen Körpern vorliegen und verwendet werden.

Ein weiterer Aspekt der Erfindung ist Verfahren zur Herstellung der erfindungsgemäßen Abdichtungsmembran, umfassend
a) Schmelzen von Ethylen-Copolymer, wobei dem Ethylen-Copolymer oder dessen Schmelze ein Photoinitiator zugegeben wird,
b) Formen der Schmelze zu einem flächenförmigen Material und
c) Bestrahlen des flächenförmigen Materials mit UV-Strahlung.

In Schritt a) werden das oder die Ethylen-Copolymere geschmolzen und ein Photoinitiator zugemischt. Bei dem Ethylen-Copolymer handelt es sich um ein thermoplastisches Elastomer, wie vorstehend beschrieben. Es können ein oder mehrere Photoinitiatoren eingesetzt werden.

Photoinitiatoren sind Initiatoren, die bei Bestrahlung mit Licht geeigneter Wellenlänge radikalische oder ionische Polymerisationen (Photopolymerisationen) oder Polykondensationsreaktionen auslösen können. Bei dem Photoinitiator kann es sich um jeden gewöhnlichen Photoinitiator handeln. Naturgemäß wird ein Photoinitiator ausgewählt, der durch die eingesetzte UV-Strahlung aktiviert werden kann. Diese werden auch als UV-Photoinitiator bezeichnet. Der Fachmann kann ohne weiteres einen an das von der jeweils eingesetzten UV-Bestrahlungsvorrichtung erzeugte UV-Bestrahlungsspektrum angepassten Photoinitiator auswählen. Bei dem Photoinitiator handelt es sich bevorzugt um einen radikalischen Photoinitiator. Photoinitiatoren sind im Handel erhältlich, z.B. unter der Handelsbezeichnung Irgacure^{®} von BASF.

Ein geeigneter Photoinitiator ist z.B. ausgewählt aus der Gruppe bestehend aus Azoverbindungen, Peroxiden, Disulfiden, Benzoinethern, Benzilmonoketalen, α-substituierten Acetophenon-Derivaten, wie α,α-Dialkoxyacetophenonen, α-Hydroxyketonen oder α-Aminoketonen, Phenylglyoxylsäureestern, α-Acyloximestern, Acylphosphinoxiden und aromatischen Ketonen, wie Benzophenon- oder Thioxanthon-Derivaten.

Der Photoinitiator kann ein Photoinitiator vom Typ I oder vom Typ II sein, wobei ein Photoinitiator vom Typ II bevorzugt ist. Der Photoinitiator ist bevorzugt ausgewählt aus der Gruppe der H-Abstraktoren. Als Photoinitiator vom Typ I bezeichnet man allgemein Photoinitiatoren, die durch intramolekulare Bindungsspaltung Radikale bilden. Als Photoinitiator vom Typ II bezeichnet man allgemein Photoinitiatoren, die durch intermolekulare Reaktion mit einem Reaktionspartner (Coinitiator) Radikale bilden. Als Reaktionspartner können auch Verbindungen dienen, die in der Reaktionsmischung bereits enthalten sind. Ein H-Abstraktor ist ein Photoinitiator vom Typ II, bei dem durch intermolekulare Wasserstoffübertragung Radikale ausgebildet werden.

In einer optionalen und bevorzugten Ausführungsform wird dem Ethylen-Copolymer oder dessen Schmelze ferner ein Vernetzungsmittel zugegeben. Durch die Zugabe eines Vernetzungsmittels kann in der Regel die Vernetzungseffizienz deutlich verbessert werden, wodurch die Bestrahlungszeiten verkürzt werden können. Der Einsatz eines Vernetzungsmittels ist insbesondere bei Einsatz von Ethylen-Copolymeren mit einem α-Olefin als Comonomer zweckmäßig, da bei diesen Ethylen-Copolymeren die Vernetzungseffizienz nur mit Photoinitiator in der Regel relativ gering ist, aber durch Zugabe des Vernetzungsmittels drastisch verbessert werden kann.

Es können ein oder mehrere Vernetzungsmittel verwendet werden. Das Vernetzungsmittel weist z.B. eine Molmasse von nicht mehr als 1000 g/mol auf.

Es können alle üblichen Vernetzungsmittel eingesetzt werden. Das Vernetzungsmittel kann z.B. zwei oder mehr, bevorzugt drei oder mehr, besonders bevorzugt drei reaktive funktionelle Gruppen, z.B. Vinyl- oder Acrylat-Gruppen aufweisen. Das Vernetzungsmittel weist bevorzugt zwei oder mehr, bevorzugt drei oder mehr, besonders bevorzugt drei Gruppen ausgewählt aus Vinylgruppen, Allylgruppen, Acrylatgruppen oder Methacrylatgruppen auf.

Konkrete Beispiele für Vernetzungsmittel sind Triallylcyanurat (TAC), Triallylisocyanurat (TAIC), Trimethylolpropantriacrylat (TMA), Trimethylolpropantrimethacrylat (TMPTA), 1,2-Polybutadien, Pentaerithritoltriacrylat, Pentaerithritoltrimethacrylat, Pentaerithritoltetraacrylat, Pentaerithritoltetramethacrylat, Dipentaerithritolpentaacrylat, Dipentaerithritolpentamethacrylat, Ditrimethylolpropantetraacrylat, Ditrimethylolpropantetramethacrylat oder Polybutadien.

Das Vernetzungsmittel kann mit einer Trägersubstanz, wie z.B. Siliciumdioxid, gemischt sein. Die Trägersubstanz kann zur Stabilisierung und/oder zur Verbesserung der Transportierbarkeit oder Dosierbarkeit zweckmäßig sein.

Der Photoinitiator wird z.B. in einer Menge von 0,05 bis 3 Gew.-Teilen, bevorzugt 0,4 bis 2 Gew.-Teilen, pro 100 Gew.-Teilen Ethylen-Copolymer zugegeben.

Das Vernetzungsmittel wird z.B. in einer Menge von 0 bis 10 Gew.-Teilen, bevorzugt 0,4 bis 2 Gew.-Teilen, pro 100 Gew.-Teilen Ethylen-Copolymer zugegeben. Wenn Vernetzungsmittel eingesetzt wird, wird es z.B. in einer Menge von nicht mehr als 10 Gew.-Teilen, bevorzugt nicht mehr als 2 Gew.-Teilen, pro 100 Gew.-Teilen Ethylen-Copolymer zugegeben. Bei diesen Mengenangaben sind gegebenenfalls in dem Vernetzungsmittel enthaltene Trägersubstanzen nicht berücksichtigt.

Dem Ethylen-Copolymer oder dessen Schmelze kann gegebenenfalls mindestens ein anderes Polymer und/oder mindestens ein Additiv zugemischt werden. Beispiele wurden vorstehend genannt. Die Schmelze kann gegebenenfalls bei oder nach der Formgebung an eine Trägerstruktur angebunden oder darin eingebettet werden. Auch hierfür wurden vorstehend Beispiele genannt.

Die Schmelze von Ethylen-Copolymer, die Photoinitiator und gegebenenfalls Vernetzungsmittel enthält, wird dann zu einem flächenförmigen Material geformt. Das flächenförmige Material kann z.B. in Form einer Platte, eines Bogens oder einer Bahn vorliegen.

Zur Formung der Schmelze können alle üblichen Formgebungsverfahren eingesetzt werden, z.B. Formpressen, Gießen, Kalandrieren oder Extrudieren oder Kombinationen davon. In einer bevorzugten Ausführungsform erfolgt das Formen der Schmelze durch ein Extrusionsverfahren, gegebenenfalls mit nachgeschalteten Kalander bzw. Glättwerk. Es kann sich z.B. um eine Extrusion mit einer Breitschlitzdüse oder um eine Blasfolienextrusion handeln.

Das gebildete flächenförmige Material wird einer UV-Bestrahlung ausgesetzt. UV-Strahlung bedeutet wie üblich Ultraviolett-Strahlung. Es erfolgt in der Regel eine flächenmäßige Bestrahlung des flächenförmigen Materials mit UV-Strahlung. Zur UV-Bestrahlung können die in der Technik bekannten UV-Bestrahlungsvorrichtungen mit einer oder mehreren UV-Lampen eingesetzt werden. In der Praxis gut geeignet sind z.B. UV-Bogenlampen. Die Intensität von UV-Lampen für Anlagen im kontinuierlichen Betrieb hängt z.B. u.a. von der Leistung der Lampe selbst, dem Reflektordesign, dem Abstand des Materials von der Lampe und der Bestrahlungsdauer ab.

Beispiele für handelsübliche UV-Bestrahlungsvorrichtungen sind z.B. UVASPOT^{®} von Dr. Hönle AG, die mit Leistungsstufen von 400 W, 1000 W und 2000 W erhältlich sind.

Der Hönle UVASPOT^{®} mit 400W F-Lampe erzeugt z.B. eine UV-Intensität von ca. 135 mW/cm² (UVA) direkt unter dem Lampenschirm. Nach 30 s Belichtung würde somit eine Energie von 30 * 135 mWs/cm² = ca. 4000 mJ/cm² ins Material eingebracht. Die UV-Intensität nimmt mit zunehmendem Abstand vom Lampenschirm naturgemäß ab, was zu berücksichtigen ist.

Die UV-Bestrahlung erfolgt vorzugsweise so, dass die in das Material eingetragene UV-Energie mindestens 1000 mJ/cm², bevorzugter mindestens 2000 mJ/cm² und besonders bevorzugt mindestens 3000 mJ/cm² beträgt. Die eingetragene UV-Energie kann z.B. im Bereich von 1000 bis 15000 mJ/cm², bevorzugt von 2000 bis 10000 mJ/cm², bevorzugter von 3000 bis 9000 mJ/cm², liegen.

Wenn bei dem erfindungsgemäßen Verfahren die Formgebung zu einem flächenförmigen Material gemäß der bevorzugten Ausführungsform durch Extrusion gegebenenfalls mit nachgeschaltetem Kalandrieren bzw. Glättwerk erfolgt, kann die UV-Bestrahlungsvorrichtung an der Extrusionsanlage angeordnet werden, so dass die UV-Bestrahlung des flächenförmigen Materials z.B. unmittelbar nach Austritt aus der Extruderdüse oder zu einem späteren Zeitpunkt, z.B. nach dem Glättwerk oder zwischen zwei gesonderten Stufen des Glättwerks erfolgt. Die UV-Bestrahlung erfolgt bevorzugt nach der endgültigen Formgebung der kompletten Membran.

Nach der Bestrahlung wird die Kunststofffolie mit dem UV-vernetzten Ethylen-Copolymer erhalten.

Die Vernetzungsdichte des UV-vernetzten Ethylen-Copolymers im flächenförmigen Material bzw. in der Folie kann z.B. über den Gelanteil bestimmt werden. Der Gelanteil kann bestimmt werden gemäß ASTM 2765, Verfahren A. Nähere Angaben sind im experimentellen Teil angeführt. Der Gelanteil im flächenförmigen Material bzw. in der Folie beträgt z.B. mindestens 40 Gew.-%, bevorzugt mindestens 55 Gew.-%, bevorzugter mindestens 70 Gew.-%, besonders bevorzugt mindestens 75 Gew.-% und am meisten bevorzugt mindestens 80 Gew.-%. Der Gelanteil kann theoretisch bis zu 100 Gew.-% betragen.

In einer optionalen und bevorzugten Ausführungsform können auf eine oder beide Seiten der erhaltenen Kunststofffolie eine Deckschicht aufgebracht werden. Die Deckschicht ist vorzugsweise eine schweißbare Deckschicht. Angaben zur Zusammensetzung der Deckschicht wurden vorstehend ausgeführt, worauf verwiesen wird. Die Aufbringung der Deckschicht kann auf übliche Weise erfolgen, z.B. durch Aufextrudieren, Kaschieren oder Auflaminieren.

Wegen der guten chemischen Kompatibilität der Deckschicht und der Abdichtungsfolie ist die Aufbringung der Deckschicht ohne weiteres möglich, so dass schweißbare Schichten in einfacher Weise aufgebracht werden können.

In einer bevorzugten Ausführungsform wird die Abdichtungsmembran gemäß dem vorstehend beschriebenen Verfahren hergestellt.

Ein weiterer Aspekt der Erfindung betrifft die Verwendung der erfindungsgemäßen Abdichtungsmembran zum Abdichten eines Substrats, das Teil eines Bauwerks des Hoch- oder Tiefbaus ist. Die Abdichtungsmembran eignet sich insbesondere zum Abdichten eines Bodens oder eines Dachs. Solche Membranen werden auch als Waterproofing-Membranen und Roofing-Membranen bezeichnet.

Das Material des Substrats, welches abzudichten ist, kann z.B. Holz, Metall, eine Metalllegierung, ein mineralisches Bindemittel wie Beton, Estrich, Mörtel oder Gips, Kunststoff oder Wärmedämmmittel wie geschäumtes Polyurethan, Mineralwolle oder geschäumtes Glas (Foamglas) sein. Besonders bevorzugt ist das Material Beton. Das Substrat, z.B. das Betonsubstrat, kann vorbehandelt sein, z.B. mit einem Primer.

### Beispiele

Folgende Handelsprodukte wurden für die Versuche verwendet:

| | | | |
|---|---|---|---|
| Levamelt^{®} 500 | Lanxess | Ethylen-Vinylacetat-Copolymer | VA-Gehalt: 50 Gew.-% |
| Engage^{®} 8842 | Dow | Ethylen-1-Octen-Copolymer | Octen-Gehalt: 47 Gew.-% |
| Benzophenon | Sigma Aldrich | | Photoinitiator Typ II, H-Abstraktor |
| Irgacure^{®} 651 | BASF | 2,2-Dimethoxy-1,2-diphenylethan-1-on | Photoinitiator Typ I, unimolekulare Spaltung |
| Actigran^{®} 70 | Kettlitz | Trimethylolpropantrimethacrylat (TMPTA) | Vernetzungsmittel, 70 Gew.- % auf pyrogenem SiO₂ |
| TAIC 70 | Kettlitz | Triallylisocyanaurat (TAIC) | Vernetzungsmittel, 70 Gew.- % auf pyrogenem SiO₂ |

Es wurden Abdichtungsfolien gemäß den Beispielen 1 bis 11 aus den genannten Komponenten in den in Tabelle 1 angegebenen Anteilen gemäß folgender Versuchsbeschreibung hergestellt.

Photoinitiator und Vernetzungsmittel, sofern eingesetzt, wurden mittels eines Innenmischers (Brabender) bei einer Schmelztemperatur von 110°C in das Copolymer eingemischt. Die Verweilzeit der vollständigen Mischung betrug 3 min. Platten mit einer Dicke von 1 mm wurden daraus mit einer Heißpresse bei 110°C hergestellt. Eine UV-Bestrahlung der Platte erfolgte anschließend unter Verwendung eines Flächenstrahlers UVASPOT^{®} von Dr. Hönle AG, der mit einer UV 400 W F2 Lampe ausgerüstet war. Die Bestrahlungsintensität bei 310 und 340 nm betrug 8,74 bzw. 3,51 W/m²/nm. Die Dauer der Bestrahlung erfolgte so lange, bis in die Platte eine Energie von 8000 mJ/cm² (Dauer ca. 60 s oder 4000 mJ/cm² (Dauer ca. 30 s) eingetragen worden war.

Der Gelanteil wurde analog der Norm ASTM D 2765, Verfahren A, bestimmt. Dafür wurden 0,3 g des belichteten und grob gemahlenen Materials in einem Beutel aus Nylon-Gewebe (Sefar Nitex^{®} 03-100/32, Maschenweite: 100 mesh) gepackt und sodann während 48h in einen Überschuss (1l) von Toluol bei 95°C getaucht. Danach wurde der Beutel mit Toluol gespült. Der im Beutel zurückgehaltene (gequollene) Anteil wurde im Vakuumschrank bei 50°C für 24h getrocknet und anschließend zurückgewogen. Der Anteil der zurückgehaltenen Masse entspricht dem Gelanteil. Es wurden zwei Versuche durchgeführt und der Mittelwert gebildet.

Zugversuche bei 70°C wurden entsprechend der Prüfnorm EN ISO 527-3 (Hantel Nr. 5) mit einer konstanten Traversengeschwindigkeit von 100mm/min (400%/min) zur Bestimmung der Bruchdehnung durchgeführt.

Die Ergebnisse sind ebenfalls in Tabelle 1 angegeben.

Alle hergestellten Abdichtungsfolien wiesen eine Dicke von 1 mm auf.

**Tabelle 1**

| Beispiel | | 1 | 2 | 3 | 4 | 5 | 6 | 7** | 8 | 9 | 10 | 11 |
|---|---|---|---|---|---|---|---|---|---|---|---|---|
| *TPE* | | | | | | | | | | | | |
| Levamelt^{®} 500 | [Gew.-Teile] | | 100 | | | | | | | | | |
| Engage^{®} 8842 | [Gew.-Teile] | 100 | | 100 | 100 | 100 | 100 | 100 | 100 | 100 | 100 | 100 |
| | | | | | | | | | | | | |
| *Photoinitiator* | | | | | | | | | | | | |
| Benzophenon | [Gew.-Teile] | 1 | 1 | 1 | 1 | 1 | | 0 | 0,1 | 0,5 | 1 | 2 |
| Irgacure^{®} 651 | [Gew.-Teile] | | | | | | 1 | | | | | |
| | | | | | | | | | | | | |
| *Vernetzer* | | | | | | | | | | | | |
| TMPTA* | [Gew.-Teile] | 0,7 | 0,7 | 0 | 7 | | | 0,7 | 0,7 | 0,7 | 0,7 | 0,7 |
| TAIC* | [Gew.-Teile] | | | | | 0,7 | 0,7 | | | | | |
| | | | | | | | | | | | | |
| Belichtungsenergie | [mJ/cm²] | 8000 | 8000 | 8000 | 8000 | 8000 | 8000 | 4000 | 4000 | 4000 | 4000 | 4000 |
| | | | | | | | | | | | | |
| Gelanteil | [wt%] | 85 | 72 | 18 | 86 | 70 | 59 | 0 | 55 | 75 | 77 | 77 |
| Bruchdehnung | [%] | 116 | n.a. | n.a. | 94 | n.a. | n.a. | n.a. | n.a. | 230 | 158 | 120 |

| | | | | | | | | | | | | |
|---|---|---|---|---|---|---|---|---|---|---|---|---|
| n.a. = nicht bestimmt * eingesetzt als Actigran^{®} 70 (TMPTA) bzw. TAIC 70 (TAIC), Mengenangabe ohne SiO₂-Anteil ** Referenzbeispiel | | | | | | | | | | | | |

## Patentansprüche

1. Abdichtungsmembran umfassend eine Kunststofffolie, die mindestens ein UV-vernetztes Ethylen-Copolymer umfasst, wobei das Ethylen-Copolymer ein thermoplastisches Elastomer ist.

2. Abdichtungsmembran nach Anspruch 1, **dadurch gekennzeichnet, dass** das Ethylen-Copolymer ausgewählt ist aus Ethylen-α-Olefin-Copolymer, Ethylen-Vinylacetat-Copolymer oder Ethylen-Propylen-Copolymer, wobei das Ethylen-α-Olefin-Copolymer bevorzugt Ethylen-Oct-1-en-Copolymer, Ethylen-But-1-en-Copolymer oder Ethylen-Hex-1-en-Copolymer ist.

3. Abdichtungsmembran nach Anspruch 1 oder Anspruch 2, **dadurch gekennzeichnet, dass** die Kunststofffolie 25 bis 100 Gew.-% UV-vernetztes Ethylen-Copolymer, bezogen auf den Kunststoffgehalt der Kunststofffolie, enthält und/oder die Kunststofffolie 5 bis 85 Gew.-% UV-vernetztes Ethylen-Copolymer, bezogen auf das Gesamtgewicht der Kunststofffolie, enthält.

4. Abdichtungsmembran nach irgendeinem der vorhergehenden Ansprüche, **dadurch gekennzeichnet, dass**
das Ethylen-Copolymer ein Ethylen-α-Olefin-Copolymer oder ein Ethylen-Vinylacetat-Copolymer ist und der Ethylenanteil im Ethylen-Copolymer im Bereich von 40 bis 95 Gew.-%, bevorzugt im Bereich von 45 bis 85 Gew.-%, liegt, oder das Ethylen-Copolymer ein Ethylen-Propylen-Copolymer ist und der Ethylenanteil im Ethylen-Copolymer im Bereich von 5 bis 30 Gew.-%, bevorzugt im Bereich von 10 bis 20 Gew.-% liegt.

5. Abdichtungsmembran nach irgendeinem der vorhergehenden Ansprüche, **dadurch gekennzeichnet, dass** auf einer Seite oder auf beiden Seiten der Kunststofffolie eine Deckschicht angeordnet ist bzw. sind, wobei die Deckschicht vorzugsweise ein Ethylen-Copolymer und/oder ein Ethylen-Homopolymer enthält.

6. Abdichtungsmembran nach Anspruch 5, **dadurch gekennzeichnet, dass** die Deckschicht ein Ethylen-Copolymer enthält, das dem Ethylen-Copolymer in der Kunststofffolie entspricht, wobei der Ethylengehalt des Ethylen-Copolymers in der Deckschicht gleich oder größer ist als der Ethylengehalt des Ethylen-Copolymers in der Kunststofffolie.

7. Verfahren zur Herstellung einer Abdichtungsmembran nach irgendeinem der Ansprüche 1 bis 6, umfassend
a) Schmelzen von Ethylen-Copolymer, wobei zum Ethylen-Copolymer oder dessen Schmelze mindestens ein Photoinitiator zugegeben wird,
b) Formen der Schmelze zu einem flächenförmigen Material und
c) Bestrahlen des flächenförmigen Materials mit UV-Strahlung.

8. Verfahren nach Anspruch 7, **dadurch gekennzeichnet, dass** zum Ethylen-Copolymer oder dessen Schmelze ferner mindestens ein Vernetzungsmittel zugegeben wird.

9. Verfahren nach Anspruch 7 oder Anspruch 8, **dadurch gekennzeichnet, dass** der Photoinitiator in einer Menge von 0,05 bis 3 Gew.-Teilen, bevorzugt 0,4 bis 2 Gew.-Teilen, pro 100 Gew.-Teilen Ethylen-Copolymer zugegeben wird und/oder das Vernetzungsmittel in einer Menge von 0 bis 10 Gew.-Teilen, bevorzugt 0,4 bis 2 Gew.-Teilen, pro 100 Gew.-Teilen Ethylen-Copolymer zugegeben wird.

10. Verfahren nach irgendeinem der Ansprüche 7 bis 9, **dadurch gekennzeichnet, dass** der Photoinitiator ein Photoinitiator vom Typ II, insbesondere ein H-Abstraktor, ist und/oder das Vernetzungsmittel ausgewählt ist aus Polybutadien, Triallylisocyanurat (TAIC), Triallylcyanurat (TAC), Trimethylolpropantrimethacrylat (TMPTA) oder Trimethylolpropantriacrylat (TMA).

11. Verfahren nach irgendeinem der Ansprüche 7 bis 10, **dadurch gekennzeichnet, dass** die in das flächige Material eingetragene UV-Energie mindestens 1000 mJ/cm² beträgt.

12. Verfahren nach irgendeinem der Ansprüche 7 bis 11, **dadurch gekennzeichnet, dass** das Formen der Schmelze durch Formpressen, Gießen, Kalandrieren, Extrudieren oder einer Kombination davon durchgeführt wird.

13. Verfahren nach irgendeinem der Ansprüche 7 bis 12, **dadurch gekennzeichnet, dass** zum Ethylen-Copolymer oder dessen Schmelze mindestens ein anderes Polymer und/oder mindestens ein Additiv zugemischt wird und/oder die Schmelze bei oder nach der Formgebung an eine Trägerstruktur angebunden oder eingebettet wird und/oder auf eine oder beide Seiten der Kunststofffolie eine Deckschicht aufgebracht wird.

14. Abdichtungsmembran nach irgendeinem der Ansprüche 1 bis 6, erhältlich nach irgendeinem Verfahren der Ansprüche 7 bis 13.

15. Verwendung einer Abdichtungsmembran nach irgendeinem der Ansprüche 1 bis 6 oder 14 zum Abdichten eines Substrats, das Teil eines Bauwerks des Hoch- oder Tiefbaus ist, insbesondere zum Abdichten eines Bodens oder eines Dachs.
